# EUROPEAN PATENT SPECIFICATION

(11) **EP 0 719 083 B1**
(45) Date of publication and mention of the grant of the patent: **27.05.1998**
(21) Application number: 94927030.0
(22) Date of filing: 20.09.1994
(51) Int. Cl.: A01K 1/10

(54) **APPARATUS FOR MOVING SILAGE**
FUTTERVERSCHIEBUNGSEINRICHTUNG
APPAREIL DE MANUTENTION DU FOURRAGE

(30) Priority: 23.09.1993 IE 930713
(43) Date of publication of application: 03.07.1996
(73) Proprietor: M & A Engineering Ltd., Castleblayney, Co. Monaghan (IE)
(72) Inventor: McMAHON, Michael, Castleblayney, Co. Monaghan (IE); McAREE, John A., Castleblayney, Co. Monaghan (IE)
(86) International application number: IE9400046
(87) International publication number: WO9508264

(56) References cited:
- EP-A- 0 043 098
- GB-A- 2 215 974
- GB-A- 2 259 437
- US-A- 4 951 608

## Description

The present invention relates to an apparatus for moving silage and in particular for pushing silage blocks.

During the winter months, some farmers house and feed their cattle in slatted houses. The farmer usually places approximately one week's supply of silage in a feeding passage. The cattle are prevented from entering the feeding passage by means of a barrier but they can feed on the silage by placing their heads through the barrier. As the silage near to the barrier is consumed, the farmer pushes more silage forward towards the barrier using a pitchfork or pike. This is a labour-intensive and time-consuming task.

Other devices, inaccurate and space consuming, are disclosed in GB-A-2 259 437 and GB-A-2 215 974, such as a type of apparatus for moving silage in a cow shed consists of two silage pushing members linked together to a main frame, whereby the linkage to the main frame is by means of a parallelogram which keeps the pushing members perpendicular to it. A tractor unit which carries the frame penetrates the silage mass by reversing along the feeding passage, and by opening the feeding members push the silage towards the barrier. Since this frame is not propelled manually as with apparatus 1 and apparatus 1', it therefore needs a wide passageway to manoeuvre and move silage appropriately, therefore the width of the apparatus alone defeats what it is endeavouring to achieve. It therefore cannot operate in a centre passage unless the minimum width of the passage is equal to the width of the tractor plus twice the width of the blocks or round bales it is endeavouring to push. Moreover, if when operating in a single shed where only one pushing member will be in operation, and if heavy resistance is encountered by the pushing member the tractor and its appending apparatus would slew around in an arc about the centre of the tractors rear axle. Therefore the apparatus cannot push the silage forwardly toward the barrier. Yet another type of apparatus is the actual feeding barrier which moves forwardly towards the silage when the animals push it. It therefore follows that the animals control what they eat which would not be very satisfactory and would lead to a lot of wastage. It also means that one such structure must be fitted for every pen in the shed.

The present invention seeks to alleviate the disadvantages associated with the above.

The present invention accordingly provides an apparatus for pushing silage blocks comprising a silage block engaging portion, a pushing limb and a stabilising limb pivotally attached to said pushing limb and means for moving the pushing limb relative to the stabilising limb.

Ideally, the means for moving the pushing limb relative to the stabilising limb comprises only one hydraulic ram. The apparatus may conveniently include anchoring members.

Conveniently, the apparatus includes two swivel castors mounted on the pushing limb and two swivel castors mounted on the stabilising limb.

The apparatus will now be described with reference to the accompanying drawings which show by way of example only, two embodiments of an apparatus according to the invention.

In the drawings:
Figure 1 is a perspective view in partial section of the apparatus in a first embodiment;
Figure 2 is an isometric view of the apparatus in a second embodiment;
Figure 2a is a front view of the apparatus in the second embodiment;
Figure 2b is a side elevation of the apparatus in the second embodiment;
Figure 2c is a rear view of the apparatus in the second embodiment; and
Figure 2d is a plan view from above of the apparatus in the second embodiment.

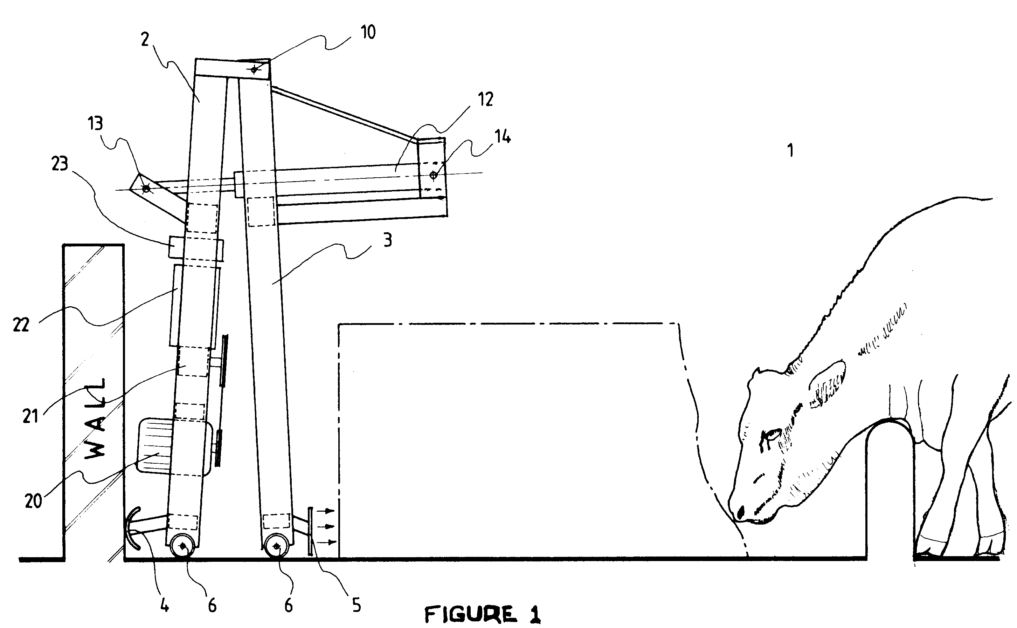

Referring to Figure 1, the apparatus is indicated generally by the reference numeral 1. This apparatus 1 is suitable for use in single slatted houses or cattle sheds, for example.

The apparatus 1 is an inverted "V" type frame including a forward pushing limb 3 attached about a pivot 10 to a rear stabilising limb 2. When apparatus 1 is in the closed position the forward limb 3 and the rear stabilising limb 2 are in the vertical and free standing on the swivel castors 6. This is one of the primary and most important features of the apparatus 1, since it narrows or reduces in width, so that it can negotiate the narrow space or path between the wall and feed in order to push the silage towards the barrier. Apparatus 1 and 1' is wheeled manually, is not attached in any way to a tractor, is totally independent, is extremely manoeuvrable on its four independent swivel castors 6 which allow it to move in any desired direction, and its minimum width when members 2 and 3 are in the vertical is 0.5 metres thereby allowing it into very narrow confines.

When it is desired to feed the cattle, valve 23 is activated by the operator to retract limbs 2 and 3 in order to bring apparatus 1 to its minimum width so that it can be manually pushed towards and between the first block or bale 100 and the wall in the side feeding passage. When in position, the operator activates the hand control valve 23. The hydraulic ram 12 pushes members 2 and 3 apart about pivot 10. Limb 3 contacts the silage block via the silage block engaging portion 5. At this point limb 2 will experience a resultant backward force until anchoring members 4 which are attached to limb 2 contact the wall of the single slatted seed. As long as the hydraulic ram extends the silage block 100 will be pushed towards the barrier. In this way the operator can control the amount of feed given to the animals.

The operator will then activate the control valve 23 to retract limb 3, and limbs 2 and 3 will come more towards the vertical until apparatus 1 is sufficiently narrow to be manually pushed towards and behind the next block or bale 100. This process will be repeated until all the feed is closer to the barrier.

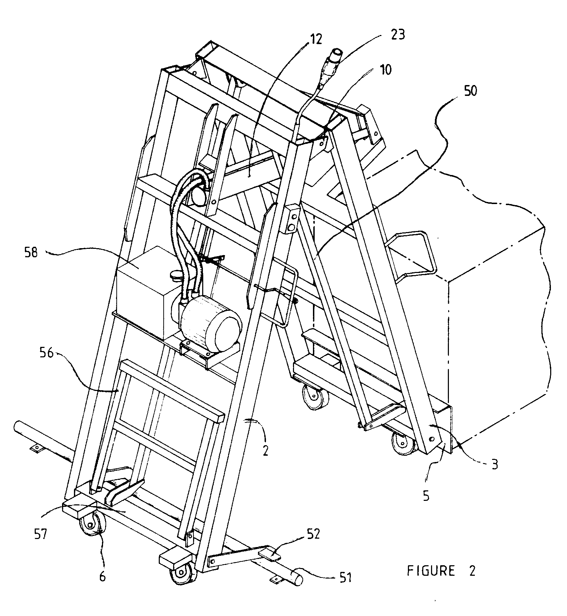

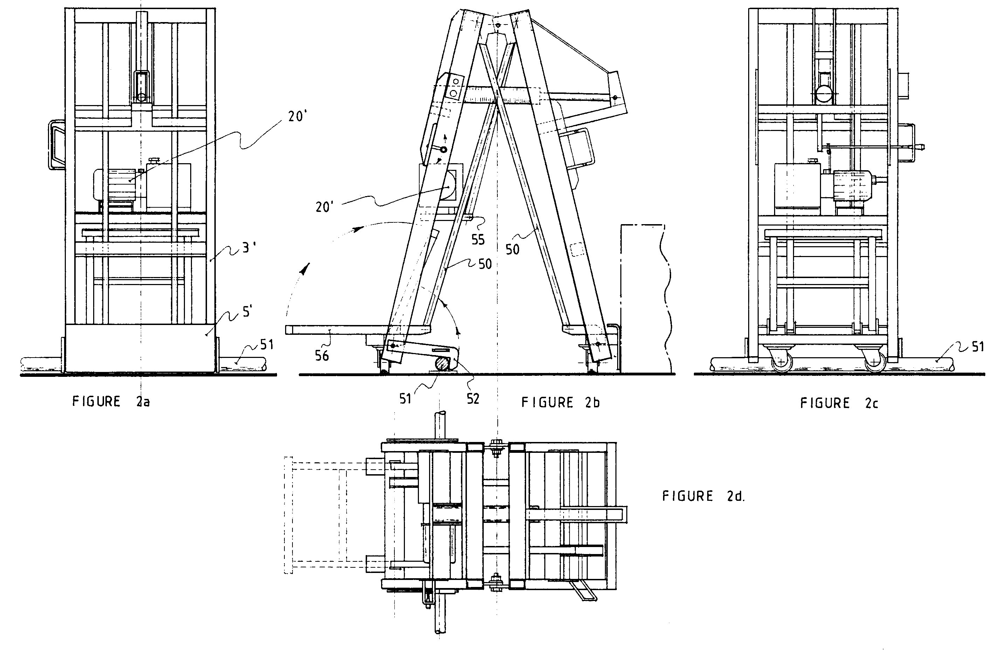

Referring now to figures 2, 2a, 2b, 2c and 2d the apparatus in a second embodiment will be described. This apparatus is indicated generally by the reference numeral 1' and operates in a similar manner to the apparatus 1 already described above except that apparatus 1' is also suitable for use in a double slatted shed. The feeding passage is situated along the full length and in the centre of the shed. The feeding barriers are both to the left and right of the passage way.

Apparatus 1' is again an inverted "V" type frame including a forward pushing limb 3 attached about a pivot 10 to a rear stabilizing limb 2, swivel castors 6, a block or bale engaging portion 5, rectangular cross members 57 located at the bases of limbs 2 and 3 but free to rotate around hidden axles, and struts 50 which are pivotally attached to said rectangular cross members 57. The struts are pivotally attached in an opposing fashion at the top of said limbs 2 and 3. This gives a parallelogram effect which ensures that irrespective of how much limbs 2 and 3 move apart or together at their bases, the rectangular crossmembers 57 will always remain in the horizontal. The swivel castors 6 which are attached underneath the crossmembers will therefore always remain in the vertical and their wheels always in contact with the ground. Engaging portion 5 is pivotally and vertically attached to crossmember 57 on limb 3. Engaging portion 5 is therefore at right angles to the silage passage floor for all movements of limb 3 whether towards or away from limb 2. Apparatus 1' includes a hydraulic Powerpack, ram and hand control valve combination 12 and 58, hooks 52 which rotate about a hidden axle and hook onto the heavy duty tube 51. Tube 51 lies on the floor of the feeding passage in the centre of the passage. Tube 51 runs along the full length of the passage parallel to the feeding barriers and is rawbolted or pinned to the centre passage floor.

To operate apparatus 1' the control valve 23 is activated to retract limbs 2 and 3 into the vertical. Apparatus 1' will then be at its minimum width. The apparatus 1' is then manually pushed towards and between opposing block rows but with the forward pushing member 3 on one side of the tube 51 and the stabilizing member 2 on the other side of said tube. Hooks 52 on the base of stabilizing member 2 are rotated and engaged around the tube 51 by the operator, using his foot, thereby holding limb 2 in a fixed position. The operator activates the control valve 23 and limb 3 moves outwardly under the action of the hydraulic ram 12 from the fixed limb 2. As limb 3 moves outwardly the engaging portion 5 thereof contacts the silage block or bale 100 and pushes it towards the feed barrier. The operator will decide when the feed is close enough to the barrier. Limb 3 will then be retracted from the feed by operating valve 23 until limbs 2 and 3 are in or near the vertical. The apparatus 1' is then manually pushed towards and behind the next block 100 and the process is repeated. In this manner the operator will use apparatus 1' to move one row of silage towards the barrier - the right hand row for instance. The operator will then turn apparatus 1' through 180^{o} ensuring that opposing limbs 2 and 3 again straddle the tube 51, and repeat the feeding process by pushing the left hand row towards the barrier until he arrives back at where he started.

In a single shed when the feed is half consumed there is greater width in the feeding passage between the wall and the feed or row of silage. Pivot arm 56 when in the horizontal will then be in abutment with the wall, thereby ensuring less angular movement between limbs 2 and 3, thus speeding up the feeding process.

When not in use or when the feeding is complete limbs 2 and 3 are retracted into the vertical for compactness. Apparatus 1 and apparatus 1' may not be confined to cattle sheds in order to do work. Apparatus 1 and Apparatus 1' could be used in many situations in order to move many materials - materials on pallets, materials in warehouses etc.

It will of course be understood that the invention is not limited to the specific details hereinbefore described which are given by way of example only, and that various modifications and alterations are possible within the scope of the claims.

## Claims

1. Silage and other materials moving Apparatus (1) which is pulled or pushed manually along the full length of the feeding passage, comprising stabilising limbs (2, 3) pivotally attached in the upper part as in an inverted "V" about pivot (10), an anchoring member (4), a silage block engaging portion (5), swivel castors (6), a hydraulic ram (12) operated by an electric motor, a hydraulic pump (21) and a control valve (23) to force limbs (2) and (3) apart.

2. Apparatus (1) as claimed in claim (1) whereby when limb (2) is placed against a fixed object such as a wall and angular movement occurs between limbs (2) and (3) about pivot (10), limb (3) moves away from limb (2) to engage and push feed towards the barrier.

3. Apparatus for moving silage (1) as claimed in claims (1) and (2) whereby when arm (56) when rotated into the horizontal will cone into abutment with a fixed object such as a wall thereby adding width to apparatus (1) to ensure less angular movement between limbs (2) and (3) thus speeding up the feeding process.

4. Apparatus (1) as claimed in claims (1), (2) and (3) whereby when limb (2) is hooked around hooks (52) to piping or tube (51) which is itself lying on and rawbolted to a feeding passage floor, and angular movement occurs between limbs (2) and (3) about the pivot (10), limb (3) moves away from limb (2) to engage and push the silage towards the cattle.

5. Apparatus (1) as claimed in claims (1), (2), (3) and (4) whereby when the silage block is pushed towards the barrier limbs (2) and (3) retract about the pivot (10) so that apparatus (1) is free to be manually pushed towards and behind the next block or bale to repeat the feeding process.

6. Apparatus (1) as claimed in claims (1),(2),(3),(4) and (5) whereby limbs (2) and (3) move outwardly and inwardly about pivot (10) by means of a hydraulic powerpack (21), ram and manual control valve combination.

7. Apparatus (1) as claimed in claim (6) whereby when limbs (2) and (3) move inwardly about pivot (10) to their innermost position, limbs (2) and (3) are then in the vertical thereby leaving apparatus (1) at its minimum width to accommodate for easy access to the narrow confines that exist between wall and feed or between rows of feed.

8. Apparatus (1) as claimed in claim (1) whereby apparatus (1) is supported and moves on swivel castors (6) which are attached to crossmembers (57).

9. Apparatus (1) as claimed in claims (1) and (8) whereby crossmembers (57) rotate or pivot on the lower ends of limbs (2) and (3) by means of hidden axles, but are attached by means of rods or struts (50) which are themselves pivotally attached and parallel to limbs (2) and (3) respectively at the top, thereby ensuring that crossmembers (57) will always remain in the horizontal thus keeping swivel castors (6) and silage pushing member (5) in the vertical.

## Patentansprüche

1. Gerät (1) zum Transport von Silage und anderen Materialien, das manuell die ganze Länge des Fütterungsganges entlang gezogen oder geschoben wird, bestehend aus stabilisierenden Streben, (2, 3) die drehbar im oberen Teil wie bei einem umgedrehten "V" mit einem Drehgelenk (10) befestigt sind, einem Verankerungsteil (4), einem Silageblockgreifteil (5), Drehrollen (6), einem hydraulischen Kolben (12), der über einen elektrischen Motor betätigt wird, einer Hydraulikpumpe (21) und einem Steuerventil (23), welches die Streben (2) und (3) auseinander bewegt.

2. Gerät (1), wie in Anspruch (1) beschrieben, wobei die Strebe (3) sich von der Strebe (2) wegbewegt, und das Futter in Richtung Barriere schiebt, wenn die Strebe (2) gegen ein stationäres Objekt, wie z.B. eine Wand, plaziert wird und eine Winkelbewegung zwischen der Strebe (2) und der Strebe (3) um das Drehgelenk (10) auftritt.

3. Gerät zum Transport von Silage (1), wie in Anspruch (1) und (2) beschrieben wobei der Arm (56), wenn dieser in die Horizontale gedreht wird, in Kontakt mit einem unbeweglichen Objekt wie z.B. einer Wand kommt und dadurch die Breite des Geräts (1) vergrößert, und dadurch dann sicherstellt, das die Winkelbewegung zwischen den Streben (2) und (3) verringert wird und der Fütterungsprozeß beschleunigt wird.

4. Gerät (1), wie in Anspruch (1), (2) und (3) beschrieben, wobei die Strebe (3) sich von der Strebe (2) wegbewegt und die Silage in Richtung der zu fütternden Tiere schiebt, wenn die Strebe (2) an die Haken (52), die an dem Rohr (51) befestigt sind, gehängt wird, wobei das Rohr wiederum auf den Fußboden des Fütterungsganges liegt und dort verdübelt ist, und eine Winkelbewegung zwischen den Streben (2) und (3) um das Drehgelenk (10) auftritt.

5. Gerät (1), wie in Anspruch (1), (2), (3) und (4) beschrieben, wobei, wenn der Silageblock gegen die Barriere gedrückt wird, die Streben (2) und (3) um das Drehgelenk (10) zurückgestellt werden, so daß das Gerät (1) frei ist und manuell in Richtung und hinter den nächsten Block oder Ballen geschoben werden kann, um den Fütterungsprozeß zu wiederholen.

6. Gerät (1), wie in Anspruch (1), (2), (3), (4) und (5) beschrieben, wobei die Streben (2) und (3) sich mit Hilfe der Kombination von Hydraulikaggregat (21), Kolben und manuellen Steuerventils um das Drehgelenk (10) herum nach außen und nach innen bewegen.

7. Gerät (1), wie in Anspruch (6) beschrieben, wobei, wenn die Streben (2) und (3) um das Drehgelenk (10) herum sich in ihre innere Endstellung bewegen, die Streben (2) und (3) senkrecht stehen und so das Gerät seine kleinsten Maße hat und leichten Zugang zu dem engen Raum bietet, der zwischen der Wand und dem Futter oder zwischen Reihen von Futter besteht.

8. Gerät (1), wie in Anspruch (1) beschrieben, wobei das Gerät (1) von Drehrollen (6) getragen und auf diesen bewegt wird, die an Querträgern (57) befestigt sind.

9. Gerät (1), wie in Anspruch (1) und (3) beschrieben, wobei die Querträger (57) sich um die unteren Enden der Streben (2) und (3) um versteckte Achsen drehen oder rotieren, aber mit Hilfe von Stangen und Streben (50) befestigt sind, die selbst wiederum drehbar gelagert sind und oben jeweils parallel zu den Streben (2) und (3) sind und dadurch sicherstellen, daß die Querträger (57) immer horizontal bleiben, und dadurch die Drehrollen (6) und das Silageschubteil (5) in der Senkrechten halten.

## Revendications

1. Appareil (1) de déplacement du fourrage ensilé et autres matériaux qui est tiré ou poussé manuellement sur toute la longueur du couloir d'avancée, comprenant des branches stabilisatrices (2, 3) attachées de manière à pivoter en leur partie supérieure et formant un "V" inversé autour du pivot (10), un élément d'ancrage (4), une partie d'engagement de la botte de fourrage (5), des roues pivotantes (6), un piston hydraulique (12) actionné par un moteur électrique, une pompe hydraulique (21) et une vanne de contrôle (23) pour écarter les branches (2) et (3).

2. Appareil (1) tel que revendiqué dans la revendication (1), pour lequel lorsque la branche (2) est placée contre un objet fixe tel qu'un mur et qu'un mouvement angulaire intervient entre les branches (2) et (3) autour du pivot (10), la branche (3) s'éloigne de la branche (2) pour engager et pousser l'avance vers la barrière.

3. Appareil pour déplacer le fourrage ensilé (1) tel que revendiqué dans les revendications (1) et (2), pour lequel le bras (56), lorsqu'il est tourné pour passer a l'horizontale, vient s'appuyer contre un objet fixe tel qu'un mur, augmentant ainsi la largeur de l'appareil (1) afin de réduire le mouvement angulaire entre les branches (2) et (3), accélérant ainsi la procédure d'alimentation.

4. Appareil (1) tel que revendiqué dans les revendications (1), (2) et (3), pour lequel lorsque la branche (2) est accrochée autour des crochets (52) à la tuyauterie ou au tube (51) qui repose lui-même sur le sol du passage de l'avance auquel il est boulonné et qu'un mouvement angulaire intervient entre les branches (2) et (3) autour du pivot (10), la branche (3) s'écarte de la branche (2) pour engager et pousser le fourrage ensilé vers le bétail.

5. Appareil (1) tel que revendiqué dans les revendications (1), (2), (3) et (4), pour lequel lorsque la botte de fourrage est poussée vers la barrière, les branches (2) et (3) s'escamotent autour du pivot (10) de sorte que l'appareil (1) peut alors être poussé manuellement vers et derrière la botte ou la balle suivante pour répéter la procédure d'alimentation.

6. Appareil (1) tel que revendiqué dans les revendications (1), (2), (3), (4) et (5), pour lequel les branches (2) et (3) se déplacent vers l'extérieur et vers l'intérieur autour du pivot (10) au moyen d'une combinaison formée d'un bloc d'alimentation hydraulique (21), d'un piston et d'une vanne de contrôle manuel.

7. Appareil (1) tel que revendiqué dans la revendication (6), pour lequel lorsque les branches (2) et (3) se déplacent vers l'intérieur autour du pivot (10) jusqu'à leur position intérieure maximale, les branches (2) et (3) sont alors à la verticale, laissant donc l'appareil (1) en position de largeur minimale pour permettre un accès facile aux espaces étroits existant entre le mur et l'avance ou entre les rangées d'avance.

8. Appareil (1) tel que revendiqué dans la revendication (1), pour lequel l'appareil (1) est porté et se déplace sur des roues pivotantes (6) qui sont fixées à des traverses (57).

9. Appareil (1) tel que revendiqué dans les revendications (1) et (9), pour lequel les traverses (57) font une rotation ou pivotent sur les extrémités inférieures des branches (2) et (3) grâce à des essieux cachés mais sont attachées au moyen de tiges ou d'étais (50) qui sont eux-mêmes fixés de manière à pivoter et sont parallèles aux branches (2) et (3) respectivement en haut, garantissant ainsi que les traverses (57) restent toujours à l'horizontale pour garder les roues pivotantes (6) et l'élément de poussage du fourrage ensilé (5) à la verticale.
